# FASCICULE DE BREVET EUROPEEN

(11) **EP 2 303 571 B1**
(45) Date de publication et mention de la délivrance du brevet: **08.08.2012**
(21) Numéro de dépôt: 09772651.7
(22) Date de dépôt: 09.06.2009
(51) Int. Cl.: B32B 15/08, B32B 27/08, B65B 7/16, B65B 51/14, C03C 17/23, C03C 17/32, C03C 17/34, C03C 17/38, C03C 17/42, C03C 27/04

(54) **SCELLAGE D'UN OPERCULE SUR UN RECIPIENT EN VERRE**
ABDICHTUNG EINES VERSCHLUSSES AUF EINEM GLASBEHÄLTER
SEALING OF A CAP ON A GLASS CONTAINER

(30) Priorité: 09.06.2008 FR 0803193
(43) Date de publication de la demande: 06.04.2011
(73) Titulaire: Amcor Flexibles Sélestat SAS, 67603 Sélestat (FR)
(72) Inventeur: GRAYER, Alain, F-67230 Witternheim (FR); BOIRON, Guy, F-68920 Wintzenheim (FR)
(74) Mandataire: Fénot, Dominique
(86) Numéro de dépôt international: PCT/FR2009/000680
(87) Numéro de publication internationale: WO 2010/000968

(56) Documents cités:
- EP-A- 0 620 202
- GB-A- 2 136 709
- US-A- 3 347 692
- US-A- 4 390 552
- US-A- 5 976 652

## Description

### DOMAINE DE L'INVENTION

L'invention concerne l'obturation hermétique d'un récipient en verre et plus particulièrement l'obturation hermétique d'un récipient en verre lorsque le contenu du conditionnement composite formé par le récipient en verre et le moyen d'obturation du récipient en verre doit être stérilisé à haute température à l'intérieur du conditionnement. L'invention concerne plus particulièrement une feuille multicouche destinée à l'operculage d'un récipient en verre, un conditionnement composite comportant un opercule constitué à partir d'une telle feuille multicouche et un procédé de fabrication d'un tel conditionnement.

### ETAT DE LA TECHNIQUE

Les récipients en verre sont des objets creux en verre et par exemple des pots, bocaux, bouteilles, gobelets, flacons... Le contenu des conditionnements composites peut être constitué de denrées liquides, solides ou en poudre à usage alimentaire telles que des jus de fruits, des yaourts, des plats préparés..., ou autres.

Les conditionnements dont le contenu doit être stérilisé à haute température sont communément réalisés au moyen d'un couvercle en métal vissé sur le récipient en verre. De tels conditionnements sont généralement difficiles à ouvrir car la force appliquée lors de la fermeture est très importante de manière à ce que la surface intérieure du couvercle appuie contre le buvant du récipient en verre sur toute sa périphérie pour obtenir une fermeture totalement hermétique, c'est à dire à éviter des fuyards, notamment lors de la stérilisation. Une telle solution est en outre couteuse.

On connaît par ailleurs des conditionnements composites constitués d'un récipient en verre sur lequel un opercule, généralement composé d'un film aluminium et d'un film polymère comportant une couche en une matière thermoplastique, est thermoscellé. La matière thermoplastique fait office d'adhésif entre l'opercule et le buvant du récipient en verre, le buvant du récipient correspondant à la zone périphérique du récipient délimitant son ouverture et plus particulièrement à la zone sur laquelle est effectué le thermoscellage. Afin d'obtenir une adhérence améliorée entre le verre et la matière thermoplastique, il est connu par exemple du brevet FR 2 435 439 d'appliquer sur le buvant du récipient un agent couplant à grande affinité pour le verre et avec des liaisons libres pour former des liaisons fortes avec la matière thermoplastique, cet agent couplant étant en l'occurrence par exemple un silane ou oxyde de silicium. Un autre traitement du verre connu des brevets FR 2 723 939 et FR 2 519 956 pour améliorer l'adhérence entre le verre et la matière thermoplastique consiste à déposer sur le buvant un revêtement tel que de l'oxyde d'étain ou de l'oxyde de titane sur lequel on redépose un complexe de chrome, par exemple du « Volan ^{™}» de la société DuPont. Les brevets FR 2 712 583, FR 2 723 939 et EP0620202 divulguent en outre que le complexe de chrome peut être remplacé par respectivement un sel de zirconium, un sel d'aluminium ou un sel de chrome...

L'adhérence obtenue entre la matière thermoplastique et le récipient en verre en traitant le buvant avec ces oxydes métalliques et ces sels métalliques n'est cependant pas suffisante et ne permet pas d'obtenir une étanchéité suffisante lorsque le conditionnement est stérilisé. En effet, la montée en température du contenu du conditionnement, et donc la dilatation des gaz, lors de l'étape de stérilisation induit de fortes pressions sur l'opercule et crée des fuyards entre l'intérieur et l'extérieur du conditionnement.

On connaît également de la demande de brevet FR 2 523 112 un conditionnement composite dans lequel le buvant du récipient en verre est traité au moyen d'oxyde de titane ou d'oxyde d'étain puis de silane avant de recevoir une couche d'un copolymère d'éthylène / acide acrylique de type « Surlyn ^{™} » de la société DuPont, ce copolymère servant au scellage d'un opercule sur le buvant. L'utilisation d'un tel copolymère améliore l'adhérence entre le récipient en verre et l'opercule mais ne convient pas lorsque l'on souhaite stériliser le conditionnement à des températures supérieures à 115°C, et plus particulièrement à des températures supérieures à 120°C, car la température de fusion du « Surlyn ^{™} » qui est comprise entre 80 et 95°C est alors inférieure à la température de stérilisation. Par conséquent, lors de la stérilisation d'un tel conditionnement, la matière thermoplastique fond et ne remplit plus ses fonctions de scellant hermétique, d'autant plus que les pressions exercées sur l'opercule lors de la stérilisation sont importantes.

Il en est de même pour l'utilisation de nombreuses matières thermoplastiques à base de polyéthylène, de polyéthylène modifié, ou de mélanges contenant du polyéthylène, comme celles présentées dans le brevet EP0620202, car de telles matières thermoplastiques ont des températures de fusion égales ou inférieure à la température de fusion du polyéthylène qui varie entre 98 et 115°C et leur utilisation n'est par conséquent pas possible pour la réalisation de conditionnements destinés à être stérilisés à des températures supérieures à 115°C, et plus particulièrement à des températures supérieures à 120°C.

Le but de la présente invention est d'obtenir un conditionnement composite présentant une obturation hermétique satisfaisante.

Un autre but de la présente invention est d'obtenir un conditionnement composite présentant une obturation hermétique pouvant résister à une étape de stérilisation.

### DESCRIPTION DE L'INVENTION

A cet effet, l'invention a pour objet une feuille multicouche destinée à l'operculage d'un récipient en verre par thermoscellage sur le buvant du récipient traité au moyen d'oxydes et/ou de sels métalliques et comportant au moins une couche support et une couche inférieure en un matériau polymère thermoscellable sur lequel est greffé un acide carboxylique insaturé, caractérisée en ce le matériau polymère thermoscellable a une température de fusion supérieure à 115°C.. Il a été constaté que l'acide carboxylique insaturé greffé sur le matériau polymère thermoscellable forme de fortes liaisons avec les oxydes et/ou sels métalliques de sorte que l'adhérence de la couche inférieure sur le buvant du récipient en verre est améliorée et permet une obturation hermétique satisfaisante du conditionnement composite. Une telle couche inférieure présente par ailleurs une faible toxicité, contrairement à de nombreux adhésifs contenant des solvants, et rend ce conditionnement composite parfaitement adapté pour le conditionnement de produits à usage alimentaire. Aussi, l'adhérence n'est

On connaît par US -A- 5 976 652 un matériau composite (métal / promoteur d'adhésion / film en polypropylène) utilisable dans des emballages destinés être stérilisés, dans lequel le promoteur d'adhésion est un polypropylène modifié à l'aide de groupements carboxyles et/ou de groupements anhydres, typiquement un polymérisat en blocs aléatoires de polypropylène modifié à l'aide d'anhydride de l'acide maléique, dont la température de fusion est de 285°C.

avantageusement pas affectée par contact avec de l'eau qui peut par exemple se trouver à l'intérieur du conditionnement composite, par exemple sous forme de vapeur d'eau lors de la stérilisation. L'utilisation d'un matériau polymère thermoscellable ayant une température de fusion élevée confère avantageusement à l'adhérence une forte résistance à la température, notamment si le produit doit être stérilisé.

Selon un mode de réalisation préféré de l'invention, la feuille multicouche est destinée à être soumise avec le récipient à une température de stérilisation Tₛₜ et le matériau polymère thermoscellable a une température de fusion supérieure à ladite température de stérilisation Tₛₜ. Les températures de stérilisation varient communément selon les contenus des conditionnements composites et les techniques dans une gamme de valeur allant de 115°C à 135°C. En choisissant un matériau polymère thermoscellable ayant une température de fusion supérieure à la température de stérilisation du conditionnement composite et de son contenu, on s'assure que la couche inférieure ne fond pas lors de l'opération de stérilisation et donc que l'adhérence reste forte et rigide entre l'opercule formée dans la feuille multicouche et le récipient en verre. Cette caractéristique est d'autant plus importante lorsque le conditionnement est destiné à être stérilisé que lors de la stérilisation, d'importantes pressions dirigées de l'intérieur du conditionnement composite vers l'extérieur s'exercent sur l'opercule, du fait notamment de la dilatation des gaz à l'intérieur du conditionnement, et tendent à favoriser la formation de fuyards. La résistance ou tenue du matériau polymère thermoplastique à la température permet aux propriétés scellantes de la couche inférieure de rester intactes. Ainsi, l'opercule selon l'invention peut être utilisée pour des applications stérilisables contrairement aux opercules de l'art antérieur pour lesquels la couche inférieure scellante fond lors de la stérilisation et perd momentanément ses propriétés scellantes de sorte que l'opercule est soulevé par les pressions exercées sur l'opercule et des fuyards se forment entre l'opercule et le buvant.

Selon un mode de réalisation préféré de l'invention, le matériau polymère thermoscellable est le polypropylène dont la température de fusion pour le PP homopolymère avoisine les 160°C. Il existe en outre également une gamme de copolymére à base de propylène ayant des points de fusion entre 120 et 160°C qui peuvent également convenir pour l'application. On peut également utiliser des polyesters, dont la température de fusion avoisine les 260°C. Le polypropylène est préféré au polyester, notamment pour des questions de coût, de disponibilité sur le marché et de facilité d'utilisation en coextrusion. Pour certaines applications, lorsque la température de stérilisation est dans la partie basse de la gamme de valeur, il peut être avantageux d'utiliser du polyéthylène haute densité (PEHD) comme matériau polymère thermoscellable dont la température de fusion oscille entre 115°C et 130°C. Le choix du grade du PEHD dépendra de la température de stérilisation utilisée.

Selon un mode de réalisation préféré, l'acide carboxylique insaturé est de l'anhydride maléique, notamment pour des questions de cout et de disponibilité sur le marché, mais également car il est plus facile à greffer. D'autres acides carboxyliques tels que l'acide fumarique, l'anhydride citraconique, l'anhydride itaconique, l'anhydride méthylène tétrahydro maléique, etc.... peuvent encore être utilisés.

Selon un mode de réalisation préféré, le rapport massique dudit acide carboxylique insaturé sur ledit matériau polymère est inférieur à 2% et de préférence inférieur 1%. Selon différents modes de réalisation préférentiels de l'invention :
- la couche de support comporte de l'aluminium ou est un film polymère translucide ;
- la couche inférieure est une couche d'un film polymère multicouche ;
- la couche inférieure est collée à la couche support au moyen d'une couche adhésive ;
- le traitement du buvant du verre comporte un dépôt de sels de chrome, de silanes, de sels de zirconium ou encore de sels d'aluminium.

L'invention s'étend également à un conditionnement composite comportant un récipient en verre et un opercule thermoscellable sur le buvant du récipient en verre, dans lequel ledit opercule est constitué à partir d'une feuille multicouche telle que décrite ci-dessus. Ce conditionnement peut par exemple être destiné à être stérilisé. Un couvercle en matière plastique ou métallique peut en outre être vissé sur le récipient de manière à pouvoir refermer ce récipient une fois l'opercule retirée. Le couvercle peut servir de contrepression lors de l'étape de stérilisation du produit de manière à ce que les pressions exercées sur l'opercule n'entraînent pas des déformations ou rupture de l'opercule et des tractions importantes sur la bande de scellage. Aussi, le couvercle peut servir à maintenir l'opercule plaquée contre le buvant du récipient.

L'invention s'étend également à un procédé pour la fabrication d'un conditionnement composite comprenant les étapes consistant à :
- fournir un récipient en verre ayant un buvant traité au moyen d'oxydes et/ou de sels métalliques,
- fournir un opercule comportant au moins une couche support et une couche inférieure en un matériau polymère thermoscellable sur lequel est greffé un acide carboxylique insaturé,
- thermosceller ledit opercule sur le buvant du récipient.

Selon un mode de réalisation préféré de l'invention, le procédé comprend en outre après le thermoscellage une étape de stérilisation du conditionnement composite, cette étape de stérilisation consistant communément à maintenir le conditionnement composite à une température comprise entre 115 et 135°C pendant une durée comprise entre 10 et 60 minutes.

Selon un autre mode de réalisation préféré, le procédé comporte en outre une étape consistant à visser un couvercle sur le récipient, ce couvercle pouvant être vissé sur le récipient avant ou après la stérilisation.

L'invention sera mieux comprise aux moyens de la description qui suit et des figures annexées données à titre d'exemple non limitatif.

### BREVE DESCRIPTION DES DESSINS

La figure 1 est une vue en coupe partielle d'un conditionnement composite selon l'invention.
La figure 2 est une vue de côté d'un autre conditionnement composite selon l'invention.

### DESCRIPTION DETAILLEE DE L'INVENTION

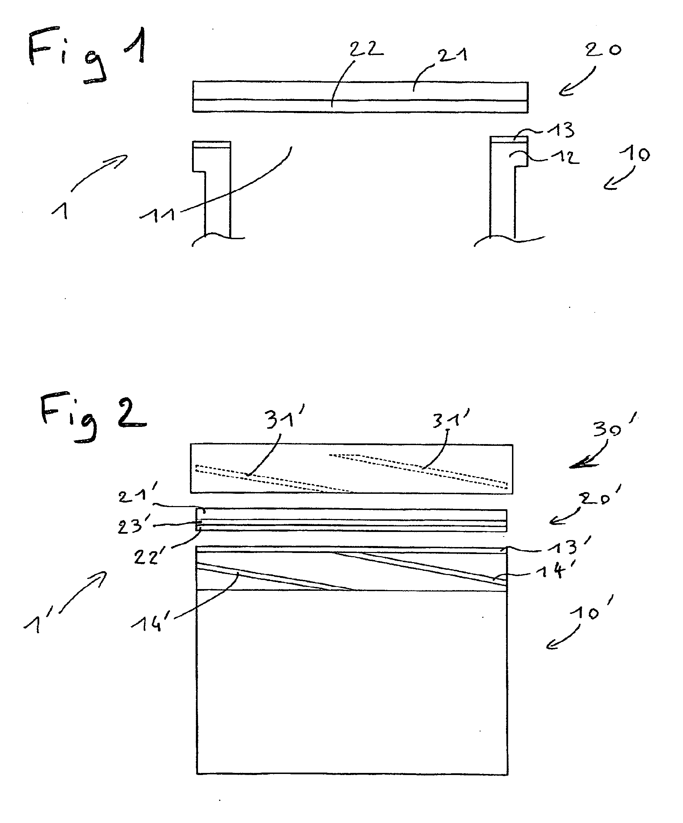

On a représenté partiellement sur la figure 1 un conditionnement composite 1 selon l'invention constitué d'un récipient en verre 10 dont seule la partie supérieure comportant l'ouverture 11 du récipient 10 est visible et d'un opercule 20. Le buvant 12 du récipient 10 sur lequel est effectué le thermoscellage de l'opercule 20 est traité au moyen d'oxydes et/ou de sels métalliques et comporte par conséquent un dépôt 13 de ces oxydes et/ou sels métalliques. De tels traitements du verre au moyen d'oxydes et/ou de sels métalliques sont largement développés dans la littérature du domaine, notamment dans les documents de brevet FR 2 435 439, FR 2 723 939, FR 2 519 956, FR 2 712 583, FR 2 523 112, EP0620202, et sont donc connus de l'homme du métier. Ces oxydes et/ou sels métalliques favorisent l'adhérence des matériaux polymères thermoplastiques sur le verre. Il s'agit par exemple des sels de chrome, des silanes, des sels de zirconium ou encore des sels d'aluminium...

L'opercule 20 est fabriqué par découpe dans une feuille multicouche et comporte comme cette feuille multicouche au moins une couche support 21 et une couche inférieure 22 thermoscellante. L'opercule 20 est thermoscellé sur le buvant 12 du récipient 10 par l'intermédiaire de cette couche inférieure 22 thermoscellante. La couche support 21 est par exemple une couche d'aluminium ayant une épaisseur comprise entre 12 et 300µm. La couche inférieure 22 thermoscellante est constituée d'un matériau polymère thermoscellable sur lequel est greffé un acide carboxylique insaturé et a une épaisseur comprise 2 et 80 µm. Cette greffe d'acide carboxylique insaturé permet d'obtenir une liaison forte entre le matériau polymère thermoscellable et les oxydes et/ou les sels métalliques, et par conséquent entre la couche inférieure 22 thermoscellante de l'opercule 20 et le verre. La présence de l'acide carboxylique insaturé dans la couche inférieure favorise également l'adhérence de la couche inférieure 22 à la couche support 21 en aluminium.

Le matériau polymère thermoscellable est de préférence le polypropylène et l'acide carboxylique insaturé est de préférence l'anhydride maléique. Le rapport massique de l'acide carboxylique insaturé sur ledit matériau polymère thermoscellable est inférieur à 10% et de préférence inférieur 2%, et encore de préférence inférieur à 1%. Il est en effet intéressant de greffer une teneur en acide carboxylique insaturé faible de manière à limiter les couts et à éviter une dégradation des propriétés physiques du matériau polymère thermoscellable, notamment de sa tenue à la température.

Le matériau polymère thermoscellable est avantageusement choisie parmi les matériaux ayant une température de fusion élevée de manière à réduire la dépendance de la qualité du scellage de l'opercule sur le récipient aux conditions de températures. Le matériau polymère thermoscellable est choisi avec une température de fusion supérieure à 115°C. Lorsque le conditionnement composite et son contenu est soumis à une étape de stérilisation, le matériau polymère thermoscellable assurant l'adhérence entre le récipient et l'opercule est soumis à la température de stérilisation qui est supérieure à 115°C et de préférence supérieure à 120°C.

Le polypropylène homo ou copolymère et les polyesters conviennent parfaitement aux applications stérilisables du conditionnement composite du fait que leurs températures de fusion sont largement supérieures aux températures courantes de stérilisation comprises entre 115°C et 135°C. Le polyéthylène haute densité convient également bien dans certaines applications stérilisables, lorsque la température de stérilisation reste dans la partie basse de la gamme de valeurs des températures de stérilisation.

On a représenté sur la figure 2 un autre conditionnement composite 1' selon l'invention. Le récipient 10' comporte sur la surface latérale extérieure, dans sa partie supérieure, des saillies 14' pour le vissage d'un couvercle 30' comportant des rainures 31' correspondantes. Le couvercle 30', en matière plastique ou métallique, permet par exemple de refermer le récipient 10' une fois l'opercule 20' retirée. Le couvercle 30' peut servir également de contrepression lors de l'étape de stérilisation du produit de manière à ce que les pressions exercées sur l'opercule 20' n'entraînent pas des déformations ou ruptures de l'opercule 20'. Aussi, le couvercle peut servir à maintenir l'opercule plaquée contre le buvant du récipient.

L'opercule 20' de la figure 2 est constitué d'une couche support 21', d'une couche inférieure 22' en un matériau polymère thermoscellable sur lequel est greffé un acide carboxylique insaturé et d'une couche intermédiaire adhésive 23' destinée à coller la couche inférieure 22' sur la couche support 21'. La couche support 21' est par exemple un film multicouche de polyester (12µm) / Siox / PP (40pm). Le film de Siox confère à l'opercule des propriétés barrières à l'oxygène. La couche intermédiaire adhésive 23' est par exemple une couche de PP d'épaisseur comprise entre 2 et 50 µm. La couche inférieure 22' est constituée d'un matériau polymère thermoscellable sur lequel est greffé un acide carboxylique insaturé et plus particulièrement un PP sur lequel est greffé de l'anhydride maléique avec une épaisseur comprise 2 et 80 µm. L'opercule 20' ainsi réalisée est translucide. La couche inférieure 22' et la couche intermédiaire adhésive 23' peuvent par exemple être coextrudées en un film multicouche qui est appliqué sur la couche support 21'.

Différents films multicouches, comportant la couche inférieure thermoscellante et destinés à être fixés sur la couche support, peuvent être imaginés pour par exemple faciliter l'ouverture de l'opercule ou introduire des barrières fonctionnelles conférant une meilleur résistance à la graisse ou aux acides... Ces films multicouches peuvent avantageusement être obtenus par coextrusion.

L'invention s'étend bien évidemment à toutes modifications du conditionnement composite qui seraient évidentes pour l'homme du métier, telle que par exemple l'utilisation d'autres polymères ou d'un métal autre que l'aluminium pour former la couche support, ou encore l'ajout d'une couche supérieure portant une impression sur la couche support... L'opercule peut aussi par exemple comprendre une languette pour faciliter la préhension de l'opercule et l'ouverture par pelage du conditionnement composite.

Des essais ont montré une parfaite tenue des récipients composites selon l'invention à une étape de stérilisation. Des récipients en verre de 150 cm3 dont le buvant a été traité avec de l'oxyde d'étain et des sels de chrome ont été remplis avec 100ml d'eau puis operculée avec des opercules constitués d'une couche d'aluminium de 50 µm et d'une couche de PP greffé avec de 1% d'anhydride maléique de 55 µm. La température de scellage se situe entre 160 et 180°C. Une partie des conditionnements composites a subit une étape de stérilisation à 121°C pendant 30 minutes.

Les valeurs de pelabilité sont inchangées avant et après stérilisation et se situent entre 8 et 35 newtons en fonction de la largeur du buvant. Aussi, aucun conditionnement composite ne présente de fuyard, avant ou après stérilisation

En comparaison, aucun conditionnement composite de l'art antérieur ne permet une application stérilisable.

## Revendications

1. Conditionnement composite (1) comportant un récipient en verre (10) et un opercule thermoscellable (20) scellé sur le buvant du récipient en verre, **caractérisé en ce que** le buvant (12) du récipient est traité au moyen d'oxydes et/ou de sels métalliques et **en ce que** ledit opercule comporte au moins une couche support (21) et une couche inférieure (22) en un matériau polymère thermoscellable sur lequel est greffé un acide carboxylique insaturé, ledit matériau polymère thermoscellable ayant une température de fusion supérieure à 115°C.

2. Conditionnement composite (1) selon la revendication 1, **caractérisé en ce qu'**il est destiné à être stérilisé à une température de stérilisation Tst et **en ce que** ledit matériau polymère thermoscellable a une température de fusion supérieure à ladite température de stérilisation Tst.

3. Conditionnement composite (1) selon l'une des revendications précédentes, dans lequel ledit matériau polymère thermoscellable est du polypropylène homo ou copolymère, du polyéthylène haute densité ou du polyester.

4. Conditionnement composite (1) selon l'une des revendications précédentes, dans lequel l'acide carboxylique insaturé est de l'anhydride maléique.

5. Conditionnement composite (1) selon l'une des revendications précédentes, dans lequel le rapport massique dudit acide carboxylique insaturé sur ledit matériau polymère thermoscellable est inférieur à 2% et de préférence inférieur 1%.

6. Conditionnement composite (1) selon l'une des revendications précédentes, dans lequel le buvant du récipient en verre comporte un dépôt de sels de chrome, de silanes, de sels de zirconium ou encore de sels d'aluminium.

7. Conditionnement composite selon l'une des revendications précédentes, comportant un couvercle destiné à être vissé sur le récipient.

8. Conditionnement selon la revendication 7, dans lequel le couvercle est en matière plastique ou en métal.

9. Opercule thermoscellable (20) pouvant être scellé par thermoscellage sur le buvant d'un récipient en verre traité au moyen d'oxydes et/ou de sels métalliques, **caractérisé en ce qu'**il comporte au moins une couche support (21) et une couche inférieure (22) en un matériau polymère thermoscellable sur lequel est greffé un acide carboxylique insaturé, ledit matériau polymère thermoscellable ayant une température de fusion supérieure à 115°C.

10. Opercule thermoscellable (20) selon la revendication 9, **caractérisé en ce qu'**il est destiné à être soumis avec ledit récipient (10) à une température de stérilisation Tst et **en ce que** ledit matériau polymère thermoscellable a une température de fusion supérieure à ladite température de stérilisation Tst

11. Opercule thermoscellable (20) selon l'une des revendications 9 ou 10, dans lequel ledit matériau polymère thermoscellable est du polypropylène homo ou copolymère, du polyéthylène haute densité ou du polyester.

12. Opercule thermoscellable (20) selon l'une des revendications 9 à 11, dans lequel l'acide carboxylique insaturé est de l'anhydride maléique.

13. Opercule thermoscellable (20) selon l'une des revendications 9 à 12, dans lequel le rapport massique dudit acide carboxylique insaturé sur ledit matériau polymère thermoscellable est inférieur à 2% et de préférence inférieur 1%.

14. Opercule thermoscellable (20) selon l'une des revendications 9 à 13, dans lequel la couche de support comporte de l'aluminium ou est un film polymère translucide.

15. Opercule thermoscellable (20) selon l'une des revendications 9 à 14, dans lequel la couche inférieure est une couche d'un film polymère multicouche.

16. Opercule thermoscellable (20) selon l'une des revendications 9 à 15, dans lequel la couche inférieure est collée à la couche support au moyen d'une couche adhésive.

17. Procédé pour la fabrication d'un conditionnement composite (1) selon l'une des revendications 1 à 5, comprenant les étapes consistant à :
- fournir un récipient (10) en verre ayant un buvant (12) traité au moyen d'oxydes et/ou de sels métalliques,
- fournir un opercule (20) comportant au moins une couche support (21) et une couche inférieure (22) en un matériau polymère thermoscellable sur lequel est greffé un acide carboxylique insaturé, ledit matériau polymère thermoscellable ayant une température de fusion supérieure à 115°C;
- thermosceller ledit opercule sur le buvant du récipient.

18. Procédé selon la revendication 17, comprenant en outre, après l'étape de thermoscellage, une étape de stérilisation du conditionnement composite.

19. Procédé selon la revendication 18, dans lequel ladite étape de stérilisation consiste à maintenir le conditionnement composite à une température comprise entre 115 et 135°C pendant une durée comprise entre 10 et 60 minutes.

20. Procédé selon l'une des revendications 17 à 19, comportant une étape consistant à visser un couvercle sur le récipient.

## Claims

1. A composite packaging (1) comprising a glass container (10) and a heat-sealable closer (20) sealed onto the sealing ring of the glass container, **characterized in that** the sealing ring (12) of the container is treated by means of oxides and/or metal salts and **in that** said closer comprises at least one support layer (21) and a lower layer (22) in a polymeric heat-sealable material onto which is grafted an unsaturated carboxylic acid, said polymeric heat-sealable material having a melting point greater than 115° C.

2. The composite packaging (1) according to claim 1, **characterized in that** it is intended to be sterilized at a sterilization temperature Tst and **in that** said polymeric heat-sealable material has a melting point greater than said sterilization temperature Tst.

3. The composite packaging (1) according to one of the previous claims, in which said polymeric heat-sealable material is polypropylene homo or copolymer, high-density polyethylene or polyester.

4. The composite packaging (1) according to one of the previous claims, in which the unsaturated carboxylic acid is maleic anhydride.

5. The composite packaging (1) according to one of the previous claims, in which the mass ratio of said unsaturated carboxylic acid over said polymeric heat-sealable material is less than 2% and preferably less than 1%.

6. The composite packaging (1) according to one of the previous claims, in which the sealing ring of the glass container comprises a deposit of chromium salts, silanes, zirconium salts or else aluminum salts.

7. The composite packaging according to one of the previous claims, comprising a lid intended to be screwed on the container.

8. The packaging according to claim 7, in which the lid is in a plastic or metal material.

9. A heat-sealable closer (20) which may be sealed by heat sealing on the sealing ring of a glass container treated by means of oxides and/or metal salts, **characterized in that** it comprises at least one support layer (21) and a lower layer (22) in a polymeric heat-sealable material onto which is grafted an unsaturated carboxylic acid, said polymeric heat-sealable material having a melting point greater than 115° C.

10. The heat-sealable closer (20) according to claim 9, **characterized in that** it is intended to be subjected with said container (10) to a sterilization temperature Tst and **in that** said polymeric heat-sealable material has a melting point greater than said sterilization temperature Tst.

11. The heat-sealable closer (20) according to one of claims 9 or 10, in which said polymeric heat-sealable material is polypropylene homo or copolymer, high-density polyethylene or polyester.

12. The heat-sealable closer (20) according to one of claims 9 to 11, in which the unsaturated carboxylic acid is maleic anhydride.

13. The heat-sealable closer (20) according to one of claims 9 to 12, in which the mass ratio of said unsaturated carboxylic acid to said polymeric heat-sealable material is less than 2% and preferably less than 1%.

14. The heat-sealable closer (20) according to one of claims 9 to 13, in which the support layer comprises aluminum or is a translucent polymeric film.

15. The heat-sealable closer (20) according to one of claims 9 to 14, in which the lower layer is a layer of a multi-layer polymeric film.

16. The heat-sealable closer (20) according to one of claims 9 to 15, in which the lower layer is adhered to the support layer by means of an adhesive layer.

17. A process for the manufacture of composite packaging (1) according to one of claims 1 to 5, comprising the steps consisting of:
- providing a glass container (10) with a sealing ring (12) treated by means of oxides and/or metal salts,
- providing a closer (20) comprising at least one support layer (21) and a lower layer (22) in a polymeric heat-sealable material onto which is grafted an unsaturated carboxylic acid, said polymeric heat-sealable material having a melting point greater than 115° C;
- heat-sealing said closer onto the sealing ring of the container.

18. The process according to claim 17, also comprising, after the heat-sealing step, a step of sterilizing the composite packaging.

19. The process according to claim 18, in which said sterilization step consists of maintaining the composite packaging at a temperature of between 115 and 135° C for a duration of between 10 and 60 minutes.

20. The process according to one of claims 17 to 19, comprising a step consisting of screwing a lid onto the container.

## Patentansprüche

1. Verbundverpackung (1), umfassend ein Behälterglas (10) und eine heißsiegelfähige Verschlussvorrichtung (20), die auf den Mündungsrand des Behälterglases gesiegelt ist, **dadurch gekennzeichnet, dass** der Mündungsrand (12) des Behälters mithilfe von Metalloxiden und/oder -salzen behandelt wird und dadurch, dass die Verschlussvorrichtung mindestens eine Trägerschicht (21) und eine untere Schicht (22) aus einem heißsiegelfähigen Polymermaterial umfasst, auf das eine ungesättigte Carbonsäure gepfropft ist, wobei das heißsiegelfähige Polymermaterial eine Schmelztemperatur von mehr als 115°C aufweist.

2. Verbundverpackung (1) nach Anspruch 1, **dadurch gekennzeichnet, dass** sie dazu bestimmt ist, bei einer Sterilisierungstemperatur Tst sterilisiert zu werden und dadurch, dass das heißsiegelfähige Polymermaterial eine Schmelztemperatur aufweist, die größer ist als die Sterilisierungstemperatur Tst.

3. Verbundverpackung (1) nach einem der vorhergehenden Ansprüche, wobei das heißsiegelfähige Polymermaterial Polypropylen-Homo- oder -Copolymer, Polyethylen hoher Dichte oder Polyester ist.

4. Verbundverpackung (1) nach einem der vorhergehenden Ansprüche, wobei die ungesättigte Carbonsäure Maleinsäureanhydrid ist.

5. Verbundverpackung (1) nach einem der vorhergehenden Ansprüche, wobei das Massenverhältnis von ungesättigter Carbonsäure zu heißsiegelfähigem Polymermaterial kleiner als 2 % und bevorzugt kleiner als 1 % ist.

6. Verbundverpackung (1) nach einem der vorhergehenden Ansprüche, wobei der Mündungsrand des Behälterglases eine Ablagerung von Chromsalzen, Silanen, Zirkoniumsalzen oder auch Aluminiumsalzen umfasst.

7. Verbundverpackung nach einem der vorhergehenden Ansprüche, umfassend einen Deckel, der dazu bestimmt ist, auf den Behälter geschraubt zu werden.

8. Verpackung nach Anspruch 7, wobei der Deckel aus Kunststoff oder Metall besteht.

9. Heißsiegelfähige Verschlussvorrichtung (20), die auf den Mündungsrand des Behälterglases gesiegelt werden kann, der mit Metalloxiden und/oder -salzen behandelt wurde, **dadurch gekennzeichnet, dass** sie mindestens eine Trägerschicht (21) und eine untere Schicht (22) aus einem heißsiegelfähigen Polymermaterial umfasst, auf das eine ungesättigte Carbonsäure gepfropft ist, wobei das heißsiegelfähige Polymermaterial eine Schmelztemperatur von mehr als 115°C aufweist.

10. Heißsiegelfähige Verschlussvorrichtung (20) nach Anspruch 9, **dadurch gekennzeichnet, dass** sie dazu bestimmt ist, mit dem Behälter (10) einer Sterilisierungstemperatur Tst unterzogen zu werden und dadurch, dass das heißsiegelfähige Polymermaterial eine Schmelztemperatur aufweist, die größer ist als die Sterilisierungstemperatur Tst.

11. Heißsiegelfähige Verschlussvorrichtung (20) nach einem der Ansprüche 9 oder 10, wobei das heißsiegelfähige Polymermaterial Polypropylen-Homo- oder -Copolymer, Polyethylen hoher Dichte oder Polyester ist.

12. Heißsiegelfähige Verschlussvorrichtung (20) nach einem der Ansprüche 9 bis 11, wobei die ungesättigte Carbonsäure Maleinsäureanhydrid ist.

13. Heißsiegelfähige Verschlussvorrichtung (20) nach einem der Ansprüche 9 bis 12, wobei das Massenverhältnis von ungesättigter Carbonsäure zu heißsiegelfähigem Polymermaterial kleiner als 2 % und bevorzugt kleiner als 1 % ist.

14. Heißsiegelfähige Verschlussvorrichtung (20) nach einem der Ansprüche 9 bis 13, wobei die Trägerschicht Aluminium umfasst oder eine transparente Polymerfolie ist.

15. Heißsiegelfähige Verschlussvorrichtung (20) nach einem der Ansprüche 9 bis 14, wobei die untere Schicht eine Schicht aus einer mehrschichtigen Polymerfolie ist.

16. Heißsiegelfähige Verschlussvorrichtung (20) nach einem der Ansprüche 9 bis 15, wobei die untere Schicht mithilfe einer Haftschicht an die Trägerschicht geklebt ist.

17. Verfahren zur Herstellung einer Verbundverpackung (1) nach einem der Ansprüche 1 bis 5, umfassend die folgenden Schritte, bestehend aus:
- Bereitstellen eines Behälterglases (10), das einen Mündungsrand (12) aufweist, der mithilfe von Metalloxiden und/oder -salzen behandelt wurde;
- Bereitstellen einer Verschlussvorrichtung (20), umfassend mindestens eine Trägerschicht (21) und eine untere Schicht (22) aus einem heißsiegelfähigen Polymermaterial, auf die eine ungesättigte Carbonsäure gepfropft ist, wobei das heißsiegelfähige Polymermaterial eine Schmelztemperatur von mehr als 115 °C aufweist;
- Heißsiegeln der Verschlussvorrichtung auf den Mündungsrand des Behälters.

18. Verfahren nach Anspruch 17, ferner nach dem Schritt des Heißversiegelns umfassend einen Schritt zur Sterilisierung der Verbundverpackung.

19. Verfahren nach Anspruch 18, wobei der Schritt der Sterilisierung darin besteht, die Verbundverpackung für einen Zeitraum im Bereich zwischen 10 und 60 Minuten auf einer Temperatur im Bereich zwischen 115 und 135 °C zu halten.

20. Verfahren nach einem der Ansprüche 17 bis 19, umfassend einen Schritt, der darin besteht, einen Deckel auf den Behälter zu schrauben.
